(19) Europäisches Patentamt
European Patent Office
Office européen des brevets

(11) Publication number: **0 239 188 B1**

(12) **EUROPEAN PATENT SPECIFICATION**

(45) Date of publication of patent specification: **18.03.92**

(51) Int. Cl.[5]: **G11B 7/26**

(21) Application number: **87300511.0**

(22) Date of filing: **21.01.87**

(54) **Preformatted optical recording medium and method of producing the same.**

(30) Priority: **21.01.86 JP 10911/86**

(43) Date of publication of application:
**30.09.87 Bulletin 87/40**

(45) Publication of the grant of the patent:
**18.03.92 Bulletin 92/12**

(84) Designated Contracting States:
**AT BE CH DE FR GB IT LI NL SE**

(56) References cited:
**EP-A- 0 021 411**
**EP-A- 0 089 263**
**FR-A- 2 279 193**
**GB-A- 2 167 225**

**PATENT ABSTRACTS OF JAPAN, vol. 8, no. 33 (P-254)[1470], 14th February 1984; & JP-A-58 188 344 (TOKYO SHIBAURA DENKI K.K.) 02-11-1983**

**PATENT ABSTRACTS OF JAPAN, vol. 9, no. 186 (P-377)[1909], 2nd August 1985; & JP-A-60 55 534 (SANYO DENKI K.K.) 30-03-1985**

**PATENT ABSTRACTS OF JAPAN, vol. 10, no. 254 (P-492)[2310], 30th August 1986; & JP-A-61 80 631 (KYODO PRINTING CO LTD) 24-04-1986**

**PATENT ABSTRACTS OF JAPAN, vol. 10, no. 290 (P-503)[2346], 2nd October 1986; & JP-A-61 107 549 (YOKOGAWA HOKUSHIN ELECTRIC CORP) 26-05-1986**

(73) Proprietor: **Kyodo Printing Co., Ltd.**
**14-12, Koishikawa 4-chome Bunkyo-ku**
**Tokyo 112(JP)**

(72) Inventor: **Fujita, Minoru**
**14-12, 4-chome, Koishikawa**
**Bunkyo-ku Tokyo, 112(JP)**
Inventor: **Fukushima, Yoichi**
**14-12, 4-chome, Koishikawa**
**Bunkyo-ku Tokyo, 112(JP)**

(74) Representative: **Charlton, Peter John et al**
**Elkington and Fife Prospect House 8 Pembroke Road**
**Sevenoaks, Kent TN13 1XR(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 239 188 B1

## Description

The present invention relates to an optical recording medium and a method of producing the same. More particularly, it relates to preformatting pits in the optical recording medium.

In the recent years a number of cards in which various kinds of informations are recorded are increasingly put in practical use.

This kind of card is required to record various kinds of informations such as data concerning individual person, data concerning a company from which the card is issued or the like data. In the earlier age such informations were recorded using visual characters and symbols and in the later age they were recorded in response to electrical signals which were generated magnetically. However, the conventional card is required to take adequate measures for preventing data from being falsified and moreover for the current tendency of increased volume of informations.

In view of the current situation as mentioned above a optical card to which laser technology is applied to record informations has been developed in the recent years. The optical card includes an information recording medium (optical recording medium) with an optical reflective surface incorporated therein and it is used in such a manner that data pits are detected with the aid of laser in dependence on difference in optical reflection among the date pits to read information therefrom.

The optical recording medium is required to include a plurality of preformatting pits each of which represents an address by means of which the position and the state of usage of track guide grooves and each sector on each of tracks for carrying out tracking during the steps of writing, reading and erasing are shown and the preformatting pits are previously written in the optical recording medium in such a manner that they can not be erased in any way.

A so-called stamping method is hitherto employed for the purpose of forming the preformatting pits as mentioned above.

To facilitate understanding of the present invention it will be helpful that the conventional stamping method as disclosed in U.S. Patent Nos. 4301099 and 4395211 will be described below with reference to Fig. 9.

When a plurality of ruggednesses serving as preformatting pit are formed on the optical recording medium, an assembly comprising a transparent base plate 21 made of glass or the like material and a layer of resist 22 deposited on the base plate 21 is subjected to exposing to laser light and thereby a pattern corresponding to arrangement of a plurality of preformatting pits 23 is formed. Thereafter, a master is obtained by plating a nickle film 24 on the thus formed pattern and a die 25 is produced with the aid of a mother stamper which is prepared by utilizing the thus obtained master. Next, by operating the die 25, the preformatting pits 23 are reproduced on a transparent plastic material 26 such as polycarbonate resin, acrylate resin or the like material in accordance with an injection molding process or the like and an aluminum reflective film 27 is placed on the recording surface whereby a required recording medium 20 is produced.

As will be readily apparent from the above description, the conventional steps of producing the recording medium are very complicated and it takes long time until the die is produced, causing a large amount of expenditure to be required for production of the recording medium. Accordingly, it may be concluded that the conventional method is not acceptable in the case of production within a short period of time and production order in the type of multi-kind and small production lot.

Particularly, due to the fact that a plurality of ruggednesses constituting preformatting pits are utilized for carrying out optical reflection, it is necessary that they are formed at a very high accuracy. Accordingly, a considerably large amount of labor is required to control a film thickness of the resist layer, resulting in production in small lot and production of the optical recording medium at an inexpensive cost being achieved only with much difficulties.

Hence, the present invention has been made with the foregoing background in mind and the object of a preferred embodiment resides in providing an optical recording medium and a method of producing the same which assure that the optical reflective surface functioning as preformatting pit can be formed within a short period of time.

Another objection of a preferred embodiment of the present invention is to provide an optical recording medium and a method of producing the same which assure that production is achieved at an inexpensive cost on a mass production line.

Accordingly the invention provides a preformatted optical recording card comprising a transparent front base plate and a rear base plate adhesively secured together, reading and writing light being transmitted, in use, through said front base plate, and a preformatted optical recording medium sandwiched therebetween, characterised in that the optical recording medium comprises

a thin film formed on the rear surface of front base plate and photo-etched with a pattern of preformatting pits, said preformatting pits extending through the thin film to the rear surface of front base plate

a covering film formed on the thin film, said covering film being in contact with the rear surface of said front base plate in the regions defined by the preformatting pits

and wherein one of the thin film and the covering film is an optical recording film and the other is either reflective or absorbing optical film.

The invention also provides a method of producing a preformatted optical recording card, comprised by forming a preformatted optical recording medium on the rear surface of a transparent front base plate and adhesively securing a rear base plate to the front base plate to sandwich the preformatting optical recording medium,

characterised in that the preformatting optical recording medium is formed by the steps of:

forming a thin film on the rear surface of said front base plate forming a layer of resist on said thin film;

exposing said layer of resist to a light beam through a mask having a pattern corresponding to an arragement of a plurality of preformatting pits;

developing said layer of resist to produce a plurality of holes corresponding to the arrangement of preformatting pits, said holes extending through to the first thin film;

etching said thin film so that said holes extend to the surface of the front base plate;

removing the residual resist;

forming a covering film within said preformatting pits and over said thin film;

wherein one of said thin film and said covering film is an optical recording film and the other is either a reflective or absorbing optical film.

The invention further provides a method of producing a preformatted optical recording card, comprised by forming a preformatting optical recording medium on the rear surface of a transparent front base plate and adhesively securing a rear base plate to the front base plate to sandwich the preformatted optical recording medium,

characterised in that the preformatted optical recording medium is formed by the step of:

forming a layer of resist on the rear surface of said front base plate;

exposing said layer of resist to a light beam through a mask having a pattern corresponding to an arrangement of a plurality of preformatting pits;

developing said layer of resist to produce a plurality of holes corresponding to the arrangement of preformatting pits, said holes extending through to the surface of the front base plate;

forming a thin film within said holes and on the residual layer of resist;

removing said residual resist and thin film covering said resist by a resist lift-off process, producing an array of preformatting pits in the form of holes extending through the thin film to the surface of the front base plate;

forming a covering film within said preformatting pits and over said thin film;

wherein one of said thin film and said covering film is an optical recording film and the other is either a reflective or absorbing optical film.

Other objects, features and advantages of the invention will become more clearly apparent from reading of the following accompanying drawings.

The accompanying drawings will be briefly described below.

Fig. 1 is an enlarged schematic sectional view of an optical card.

Fig. 2 is a perspective view of the optical card in Fig. 1.

Fig. 3 is an enlarged sectional view illustrating such a state that a thin film having a pattern corresponding to arrangement of a plurality of preformatting pits is formed on a base plate.

Fig. 4 is an enlarged schematic sectional view of an optical recording medium.

Fig. 5 is a schematic perspective view of the optical recording medium

Fig. 6 is another schematic perspective view of the optical recording medium.

Fig. 7 is an illustrative view showing the steps of producing an optical recording medium.

Fig. 8 is another illustrative view showing the steps of producing an optical recording medium, and

Fig. 9 is an illustrative view showing a conventional method of producing an optical recording medium.

Now, the present invention will be described in a greater detail hereunder with reference to the accompanying drawings which illustrate preferred embodiments thereof.

In Figs. 1 and 2 reference numeral 10 designates an optical card. The optical card 10 is so constructed that an optical recording medium 1 is adhesively secured to a card board 12 with the aid of a layer of adhesive 11 which is interposed therebetween and magnetic tapes 8 are fixedly placed on both the surfaces of the thus constructed optical card 10 using an adhesive. The optical recording medium 1 is formed with a plurality of preformatting pits 5 and a plurality of data pits 5a. As mentioned above, the present invention consists of technology which is related to the preformatting pits 5. As shown in Fig. 3, the optical recording medium 1 is produced in such a manner that a thin film 3 having a pattern corresponding to arrangement of the preformatting pits 5 is built on a base plate 2. The thin film 3 is constituted by an optical film or optical recording film. As required, a covering film 4 may be built on the thin film 3, as shown in Fig. 4. Specifically, the covering film 4 is constituted by an optical recording film in the case where the thin film 3 comprises an optical film, while it is constituted by an optical film in the case where the thin film 3 comprises an optical recording film.

Material having an excellent light permeability such as polycarbonate resin, acrylic resin, glass or the like is employed for the base plate 2. The thin film 3 is built on the base plate 2 while it is formed with a plurality of hole-shaped preformatting pits 2. Accordingly, the upper surface of the base plate 2 is exposed to the outside at the position where the pits 5 are located. But it should be noted that in the case where the covering film 4 is placed on the thin film 3 as shown in Fig. 4, the exposed parts on the surface of the base plate 2 are covered with the covering film 4. The thin film 3 is constituted by material of which light reflectivity is different from that of the covering film 4. On the other hand, the optical recording film is constituted by optical recording material such as Te, In, Bi, TeOx, $WO_3$, $In_2O_3$, $As_2O_3$, $MoO_3$, TeAs, $CS_2$-Te, Te-C, As-Se-S-Ge, polymer with coloring agent contained therein, mixture of silver and polymer, photomagnetic recording material or the like. In this specification the optical film is referred to as a film which is capable of absorbing and reflecting light. For instance, Al, Cu, Ag, Ni, Cr, Zn, Sn or the like can be employed for the optical film.

The pits 5 on the thin film 3 are formed by transference from a mask or photographic film which has a pattern corresponding to arrangement of the pits 5. The transference is achieved in accordance with an etching process. Further, near infrared light such as semiconductor laser light or the like and visual light, such as white light, tungsten light or the like can be preferably employed as reading light.

The pits 5 in the optical recording medium 1 may be built in the form of bright portion as shown in Fig. 5. Alternatively, they may be built in the form of dark portion as shown in Fig. 6.

Next, description will be made below with reference to Fig. 7 as to a method of producing the optical recording medium as constructed in the above-described manner.

Fig. 7 illustrates an embodiment of the method which is practiced in accordance with an etching process. First, a thin film 3 comprising an optical film constituted by material having high light reflectivity such as Al or the like is formed on the one surface of the base plate 2 by vacuum depositing (see Fig. 7(a)) and a layer of resist 11 is then placed on the thin film 3 by spin coating (see Fig. 7(b)). The resist 11 may be either of positive type or of negative type.

Next, a mask 12 having a pattern corresponding to arrangement of the preformatting pits is placed on the layer of resist 11 in the closely contacted state and the thus built assembly is then subjected to exposing (see Fig. 7(c)).

Next, the resist 11 wihch has been exposed to light beam is developed (see Fig. 7(d)). Thus, transference of the pit pattern onto the resist 11 is achieved whereby a plurality of holes are formed on the resist 11 at the position where the pits 5 are to be located. No resist is existent in each of the holes because it is removed therefrom during the step of developing. Thus, the upper surface of the thin film 3 is exposed to the outside at the bottom of each of the holes while the residual part of the resist 11 is kept still placed on the thin film to cover the surface of the latter therewith (see Fig. 7-(d)).

Next, the exposed parts on the thin film are subjected to etching in the presence of etching liquid which is filled in each of the holes on the resist. This leads to a result that the part of the thin film which is not covered with the resist is removed until the upper surface of the base plate is exposed to the outside and the other part of the thin film which is covered with the resist 11 remains together with the resist while it is adhesively secured to the surface of the base plate (see Fig. 7(e)).

Next, the resist is removed (see Fig. 7(f)). Now, production of the preformatted optical recording medium has been completed by way of the above-described steps.

As required, a covering film is placed on the thin film (see Fig. 7(g)).

Example

First, an aluminium film having a thickness in the range of $8 \times 10^{-8}$ to $1.2 \times 10^{-7}$ m (800 to 1200 Å) was formed over the upper surface of a base plate made of polycarbonate resin by vaccum depositing.

Next, the thus formed aluminum film was coated with resist manufactured (and sold under the trade name MICROPOSIT -S-1400) by Shipley Co., Ltd. by spin coating under the operative condition of 3,000 rpm until the resist film had a thickness of $5 \times 10^{-7}$ to $7 \times 10^{-7}$ m (0.5 to 0.7 micron). Thereafter, the resist film was dried by heating at a temperature of 90 °C for 20 minutes.

Next, a mask having a pattern corresponding to arrangement of a plurality of preformatting pits was placed on the resist film in the closely contacted state and it was then subjected to exposing to light beam at an optical density of 4 $mJ/cm^2$.

After the assembly was immersed for 20 seconds in a solution which was prepared by diluting developing liquied MF 312 of Shipley Co., Ltd, with twice water, it was wiped free from water and it is then dried.

Next, the assembly was immersed in phosphoric acid-nitric acid based etching liquid at a temperature of 40 °C for 1 minute to etch the aluminum film. Thereafter, it was washed with water, it was then wiped free from water and finally it was dried.

Next, the assembly was immersed in peeling liquid ( No. 10) manufactured by Tokyo Oka Kogyo Co., Ltd. for 2 seconds to remove the resist. Thereafter, it was washed with water, it was then wiped free from water and finally it was dried.

Next, the assembly was covered with a layer of transparent acrylic resin.

As a result, a properly preformatted optical recording medium was obtained by way of the steps as mentioned above.

Fig. 8 illustrates another embodiment of the method which is practiced in accordance with a so called resist lift-off process.

First, a layer of resist 11 is placed on the base plate 2 by spin coating (see Fig. 8(a)). The resist 11 may be either of positive type or negative type.

Next, a mask 12 having a pattern corresponding to arrangement of the preformatting pits is placed on the resist 11 in the closedly contacted state and the thus built assembly is then subjected to exposing (see Fig. 8(b)).

Next, the resist 11 which has been subjected to exposing in that way is developed (see Fig. 8(c)). Thus, transference of the pit pattern onto the resist 11 is achieved whereby a plurality of holes are formed on the resist 11 at the position where the pits are to be located. No resist is existent in each of te holes because it is removed therefrom during the step of developing. Thus, the upper surface of the base plate 2 is exposed to the outside while the residual part of the same is covered with the resist 11 (see Fig. 8(c)).

Next, a thin film 3 comprising an optical film constituted by metallic coating is formed on the resist 11 by plating or depositing (see Fig. 8(d)).

Next, the resist 11 is removed in accordance with the resist lift-off process. After completion or removal of the resist only the thin film 3 having a pattern corresponding to arrangement of the pits 5 remains on the base plate 2 (see Fig. 8(e)). Now, produciton of the optical recording medium 1 has been completed by way of the above-described manner.

As required, covering film 4 comprising an optical recording film is placed on the thin film (see Fig. 8(f)).

Incidently, description has been made above with respect to the embodiment where an optical film is used for the thin film and an optical recording film is used for the covering film. However, the present invention should not be limited only to this. Alternatively, it may be applied to the case where an optical recording film is used for the thin film and a reflective or absorbing optical film is used for the covering film.

When the preformatted optical recording medium as constructed in the above-described manner is practically used, as shown in Fig. 1, reading light is emitted toward the lower surface of the base plate and reflected light is then read. At this moment some of the preformatting pits can be read in dependence on difference in reflection which is caused by existence and absence of the thin film or difference in reflection between the thin film and the covering film.

Since the preformatted optical recording medium of the invention can be produced in accordance with the photographic etching technique, it is assured that optical recording cards can be produced and prepared at an inexpensive cost within a short period of time. Another advantageous features of the invention are that a large number of optical recording cards can be produced at a high productivity on the basis of mass production and moreover a manufacturer can adapt himself to any order in the type of multi-kind and small production lot.

## Claims

1. A preformatted optical recording card comprising a transparent front base plate (2) and a rear base plate (12) adhesively secured together, reading and writing light being transmitted, in use, through said front base plate (2), and a preformatted optical recording medium (3,4) sandwiched therebetween, characterised in that the optical recording medium comprises

   a thin film (3) formed on the rear surface of front base plate (2) and photo-etched with a pattern of preformatting pits (5), said preformatting pits (5) extending through the thin film to the rear surface of front base plate (2)

   a covering film (4) formed on the thin film (3), said covering film (4) being in contact with the rear surface of said front base plate (2) in the regions defined by the preformatting pits (5)

   and wherein one of the thin film (3) and the covering film (4) is an optical recording film and the other is either reflective or absorbing optical film.

2. A method of producing a preformatted optical recording card, comprised by forming a preformatted optical recording medium (3,4) on the rear surface of a transparent front base plate (2) and adhesively securing a rear base plate (12) to the front base plate (2) to sandwich the preformatted optical recording medium (3,4),

   characterised in that the preformatted optical recording medium (3,4) is formed by the steps of:

forming a thin film (3) on the rear surface of said front base plate (2) forming a layer of resist (11) on said thin film (3);

exposing said layer of resist (11) to a light beam through a mask (12) having a pattern corresponding to an arragement of a plurality of preformatting pits (5);

developing said layer of resist (11) to produce a plurality of holes corresponding to the arrangement of preformatting pits (5), said holes extending through to the first thin film (3);

etching said thin film (3) so that said holes extend to the surface of the front base plate (2);

removing the residual resist (11);

forming a covering film (4) within said preformatting pits (5) and over said thin film (3);

wherein one of said thin film (3) and said covering film (4) is an optical recording film and the other is either a reflective or absorbing optical film.

**3.** A method of producing a preformatted optical recording card, comprised by forming a preformatted optical recording medium (3,4) on the rear surface of a transparent front base plate (2) and adhesively securing a rear base plate (12) to the front base plate (2) to sandwich the preformatted optical recording medium (3,4),

characterised in that the preformatted optical recording medium (3,4) is formed by the steps of:

forming a layer of resist (11) on the rear surface of said front base plate (2);

exposing said layer of resist (11) to a light beam through a mask (12) having a pattern corresponding to an arrangement of a plurality of preformatting pits (5);

developing said layer of resist (11) to produce a plurality of holes corresponding to the arrangement of preformatting pits (5), said holes extending through to the surface of the front base plate (2);

forming a thin film (3) within said holes and on the residual layer of resist (11);

removing said residual resist (11) and thin film covering said resist (11) by a resist lift-off process, producing an array of preformatting pits (5) in the form of holes extending through the thin film (3) to the surface of the front base plate (2);

forming a covering film (4) within said preformatting pits (5) and over said thin film (3);

wherein one of said thin film (3) and said covering film (4) is an optical recording film and the other is either a reflective or absorbing optical film.

## Revendications

**1.** Une carte d'enregistrement optique formatée au préalable comprenant une plaque frontale de base transparente (2) et une plaque de base arrière (12), fixées entre elles par adhérence, une lumière d'écriture et de lecture étant transmise, en utilisation, à travers ladite plaque frontale de base (2), et un milieu d'enregistrement optique formaté au préalable (3, 4) pris en sandwich entre elles, caractérisée en ce que le milieu d'enregistrement optique comprend:

une pellicule mince (3) formée sur la surface arrière de la plaque frontale de base (2) et photogravée selon une configuration de puits (5) de formatage préalable, lesdits puits (5) de formatage préalable traversant la pellicule mince vers la surface arrière de la plaque frontale de base (2)

une pellicule de recouvrement (4) formée sur la pellicule mince (3), ladite pellicule de recouvrement (4) étant en contact avec la surface arrière de ladite plaque frontale de base (2) dans les régions définies par les puits (5) de formatage préalable

et dans lequel l'une des couches parmi la couche mince (3) et la couche de recouvrement (4) est une pellicule d'enregistrement optique et l'autre est une pellicule optique, soit réfléchissante, soit absorbante.

**2.** Un procédé de production d'une carte d'enregistrement optique formatée au préalable comprenant la formation, sur la surface arrière d'une plaque de base frontale transparente (2), d'un milieu d'enregistrement optique formaté au préalable (3, 4) et la fixation par adhérence d'une plaque de base arrière (12) sur la plaque frontale de base (2) pour prendre en sandwich le milieu d'enregistrement optique formaté au préalable (3, 4),

caractérisé en ce que le milieu d'enregistrement optique formaté au préalable (3, 4) est formé par les étapes consistant à:

former une pellicule mince (3) sur la surface arrière de ladite plaque frontale de base (2) formant une couche de résine (11) sur ladite pellicule mince (3);

exposer ladite couche de résine (11) à un faisceau lumineux à travers un masque (12) qui présente une configuration correspondant à un agencement de plusieurs puits (5) de formatage préalable;

développer ladite couche de résine (11) pour produire plusieurs trous correspondant à l'agencement de puits (5) de formatage préalable, lesdits trous traversant la première pellicule mince (3);

graver ladite pellicule mince (3) de façon que lesdits trous traversent jusqu'à la surface de la plaque frontale de base (2);

enlever la résine résiduelle (11);

former une pellicule de recouvrement (4) à l'intérieur desdits puits (5) de formatage préalable et au-dessus de ladite pellicule mince (3);

dans lequel une pellicule parmi ladite pellicule mince (3) et ladite pellicule de recouvrement (4) est une pellicule d'enregistrement optique et l'autre est une pellicule optique, soit réfléchissante, soit absorbante.

**3.** Un procédé de production d'une carte d'enregistrement optique formatée au préalable comprenant la formation, sur la surface arrière d'une plaque de base frontale transparente (2), d'un milieu d'enregistrement optique formaté au préalable (3, 4) et la fixation par adhérence d'une plaque de base arrière (12) sur la plaque frontale de base (2) pour prendre en sandwich le milieu d'enregistrement optique formaté au préalable (3, 4),

caractérisé en ce que le milieu d'enregistrement optique formaté au préalable (3, 4) est formé par les étapes consistant à:

former une couche de résine (11) sur la surface arrière de ladite plaque frontale de base (2);

exposer ladite couche de résine (11) à un faisceau lumineux à travers un masque (12) qui présente une configuration correspondant à un agencement de plusieurs puits (5) de formatage préalable;

développer ladite couche de résine (11) pour produire plusieurs trous correspondant à l'agencement de puits (5) de formatage préalable, lesdits trous traversant la surface de la plaque frontale de base (2);

former une pellicule mince (3) à l'intérieur desdits trous et sur la couche résiduelle de résine (11);

enlever ladite résine résiduelle (11) et la pellicule mince recouvrant ladite résine (11) par un processus de décollement de résine, produire un réseau de puits (5) de formatage préalable sous forme de trous traversant la pellicule mince (3) jusqu'à la surface de la plaque frontale de base (2);

former une pellicule de recouvrement (4) à l'intérieur desdits puits (5) de formatage préalable et au-dessus de ladite pellicule mince (3);

dans lequel une pellicule parmi ladite pellicule mince (3) et ladite pellicule de recouvrement (4) est une pellicule d'enregistrement optique et l'autre est une pellicule optique, soit réfléchissante, soit absorbante.

**Patentansprüche**

**1.** Vorformatierte optische Aufzeichnungskarte, umfassend eine transparente vordere Grundplatte (2) und eine rückwärtige Grundplatte (12), die miteinander verklebt sind, wobei beim Gebrauch das Licht zum Lesen und Schreiben durch die vordere Grundplatte (2) hindurchgeschickt wird, und ein vorformatiertes optisches Aufzeichnungsmedium (3, 4), das sandwichartig zwischen beiden eingelagert ist, dadurch gekennzeichnet, daß das optische Aufzeichnungsmedium

einen dünnen Film (3), der auf der Rückseite der vorderen Grundplatte (2) gebildet und mit einem Muster vorformatierender Krater (5) photogeätzt ist, wobei die vorformatierenden Krater (5) sich durch den dünnen Film hindurch bis zur Rückseite der vorderen Grundplatte (2) erstrecken,

einen auf dem dünnen Film (3) gebildeten Deckfilm (4), der in den durch die vorformatierenden Krater (5) definierten Bereichen sich in Kontakt mit der Rückseite der vorderen Grundplatte (2) befindet,

umfaßt und einer von den beiden, dem dünnen Film (3) und dem Deckfilm (4), ein optischer Aufzeichnungsfilm ist, und der andere entweder ein reflektierender oder absorbierender optischer Film ist.

**2.** Verfahren zur Herstellung einer vorformatierten optischen Aufzeichnungskarte durch Bilden eines vorformatierten optischen Aufzeichnungsmediums (3, 4) auf der Rückseite einer transparenten vorderen Grundplatte (2) und Aufkleben einer rückwärtigen Grundplatte (12) auf die vordere Grundplatte (2), um das vorformatierte optische Aufzeichnungsmedium (3, 4) sandwichartig einzulagern,

dadurch gekennzeichnet, daß das vorformatierte optische Aufzeichnungsmedium (3, 4) gebildet wird durch die Schritte

des Bildens eines dünnen Films (3) auf der Rückseite der vorderen Grundplatte (2), wonach eine Resist-Schicht (11) auf dem dünnen Film gebildet wird;

des Belichtens der Resist-Schicht (11) mittels eines Lichtstrahls durch eine Maske (12) mit einem Muster, das einer Anordnung einer Mehrzahl vorformatierender Krater (5) entspricht;
des Entwickelns der Resist-Schicht zur Erzeugung einer Mehrzahl von Löchern entsprechend der Anordnung der vorformatierenden Krater (5), wobei die Löcher bis zu dem ersten dünnen Film (3) durchgehen,
des Ätzens des dünnen Films (3), so daß die Löcher bis zur Oberfläche der vorderen Grundplatte (2) durchgehen;
des Entfernens des restlichen Resists (11);
des Bildens eines Deckfilms (4) im Inneren der vorformatierenden Krater (5) und über dem dünnen Film (3);
worin einer von den beiden, dem dünnen Film (3) und dem Deckfilm (4), ein optischer Aufzeichnungsfilm ist, und der andere entweder ein reflektierender oder absorbierender optischer Film ist.

**3.** Verfahren zur Herstellung einer vorformatierten optischen Aufzeichnungskarte durch Bilden eines vorformatierten optischen Aufzeichnungsmediums (3, 4) auf der Rückseite einer transparenten vorderen Grundplatte (2) und Aufkleben einer rückwärtigen Grundplatte (12) auf die vordere Grundplatte (2), um das vorformatierte optische Aufzeichnungsmedium (3, 4) sandwichartig einzulagern,
dadurch gekennzeichnet, daß das vorformatierte optische Aufzeichnungsmedium (3, 4) gebildet wird durch die Schritte
des Bildens einer Resist-Schicht (11) auf der Rückseite der vorderen Grundplatte (2);
des Belichtens der Resist-Schicht (11) mittels eines Lichtstrahls durch eine Maske (12) mit einem Muster, das einer Anordnung einer Mehrzahl vorformatierender Krater (5) entspricht;
des Entwickelns der Resist-Schicht zur Erzeugung einer Mehrzahl von Löchern entsprechend der Anordnung der vorformatierenden Krater (5), wobei die Löcher bis zu der Oberfläche der vorderen Grundplatte (2) durchgehen,
des Bildens eines dünnen Films (3) im Inneren der Löcher und auf der restlichen Resist-Schicht (11);
des Entfernens des restlichen Resists (11) und des den Resist (11) bedeckenden dünnen Films mittels eines Resist-Abhebe-Verfahrens,
des Herstellens einer Anordnung vorformatierender Krater (5) in Form von Löchern, die durch den dünnen Film (3) bis zu der Oberfläche der vorderen Grundplatte (2) durchgehen;
des Bildens eines Deckfilms (4) im Inneren der vorformatierenden Krater (5) und über dem dünnen Film (3);
worin einer von den beiden, dem dünnen Film (3) und dem Deckfilm (4), ein optischer Aufzeichnungsfilm ist, und der andere entweder ein reflektierender oder absorbierender optischer Film ist.

FIG. 1

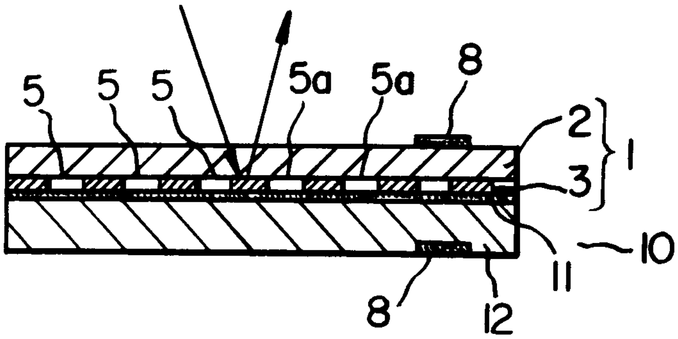


FIG. 2

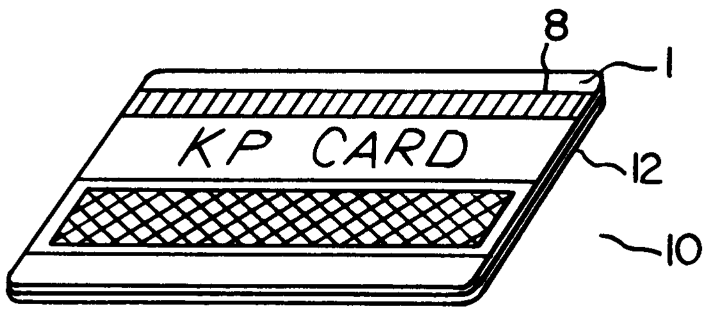


FIG. 3

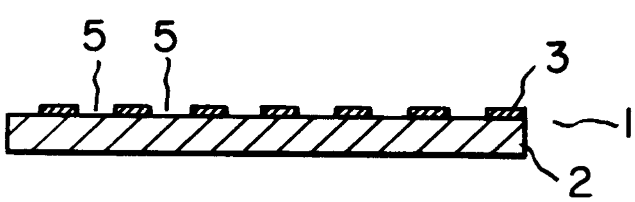


FIG. 4

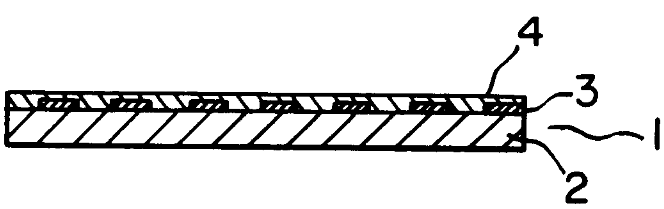

FIG. 5

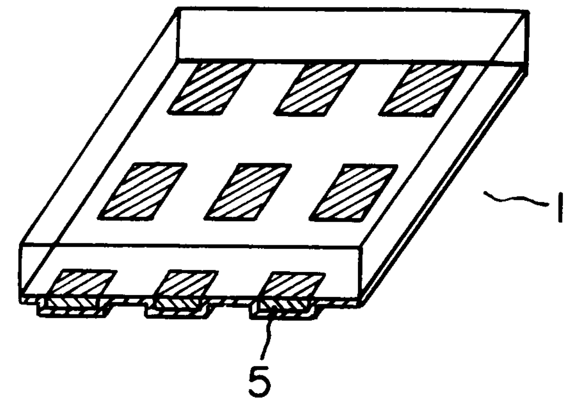


FIG. 6

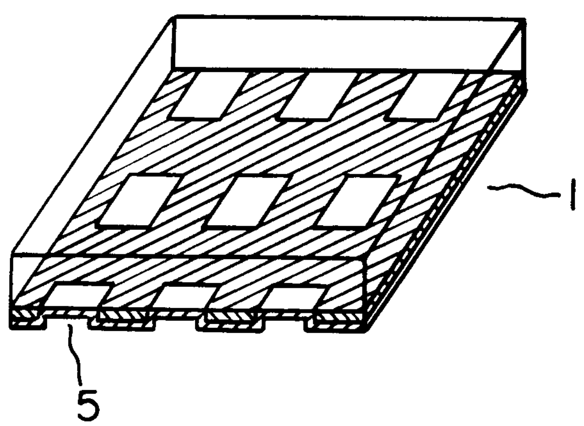


FIG. 7

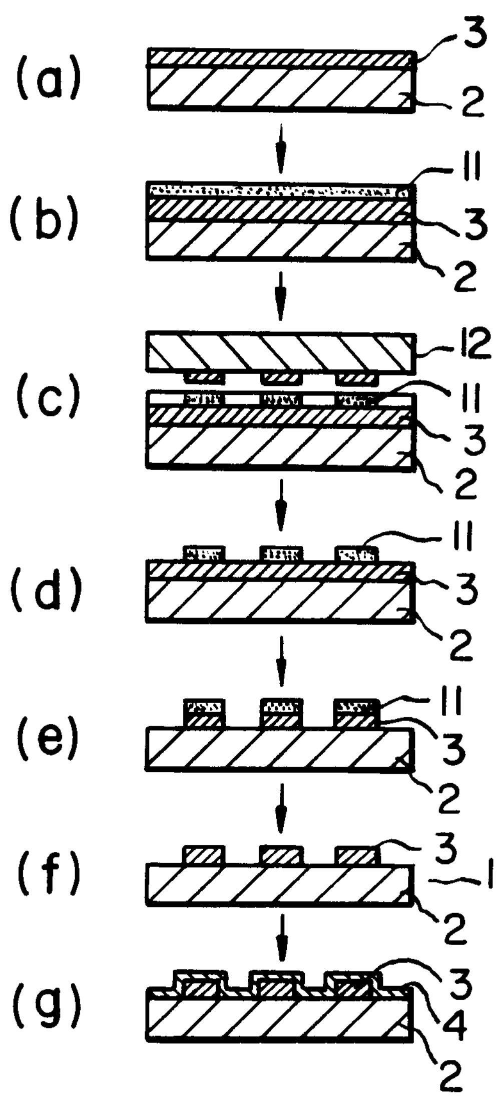

FIG. 8

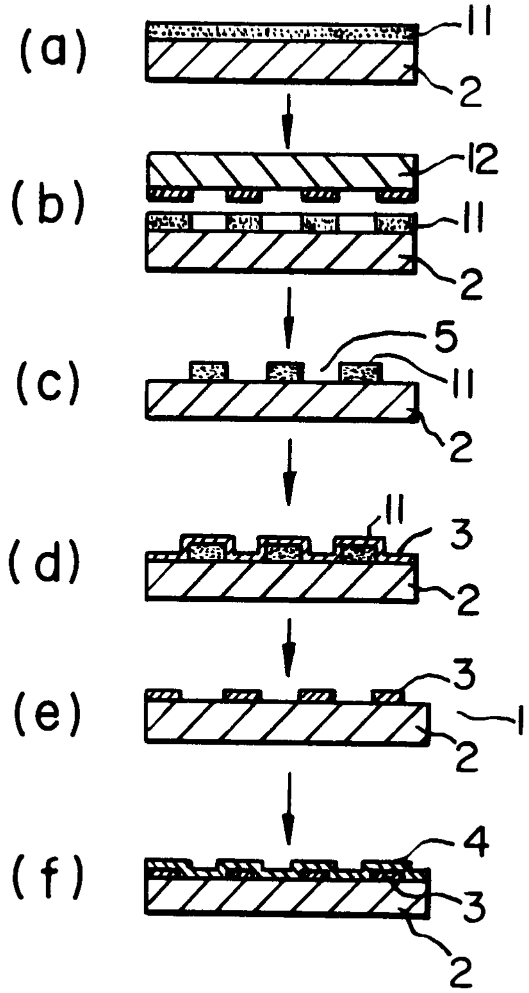
(a)
11
2
(b)
12
11
2
(c)
5
11
2
(d)
11
3
2
(e)
3
1
2
(f)
4
3
2

FIG. 9

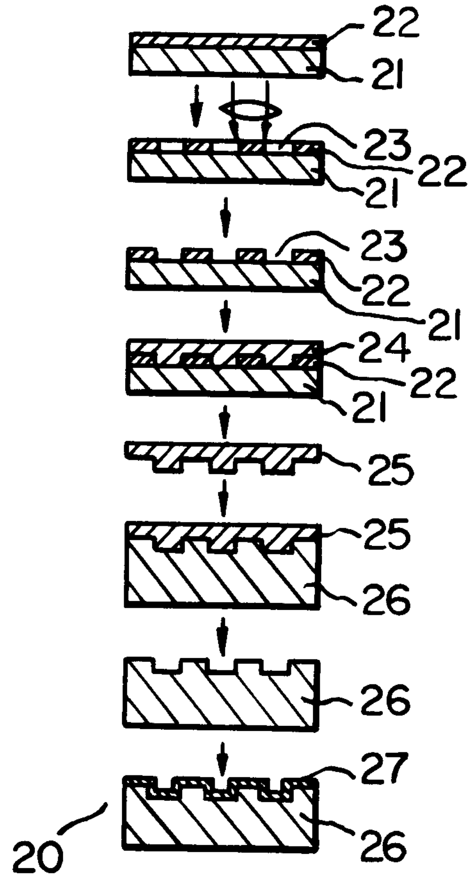
22
21
23
22
21
23
22
21
24
22
21
25
25
26
26
27
20
26